(19) Europäisches Patentamt / European Patent Office / Office européen des brevets

(11) **EP 4 086 825 A1**

(12) **EUROPEAN PATENT APPLICATION**

(43) Date of publication:
**09.11.2022 Bulletin 2022/45**

(21) Application number: **21172310.1**

(22) Date of filing: **05.05.2021**

(51) International Patent Classification (IPC):
**G06Q 10/06** (2012.01)

(52) Cooperative Patent Classification (CPC):
**G06Q 10/063**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Himmelhuber, Anna**
**93142 Maxhütte-Haidhof (DE)**
• **Liu, Yushan**
**81737 München (DE)**

(54) **METHOD AND SYSTEM FOR PROVIDING RECOMMENDATIONS CONCERNING A PROJECT CONFIGURATION TO CONFIGURE AN INDUSTRIAL SYSTEM**

(57) The present invention relates to a method for providing recommendations concerning a project configuration to configure an industrial system,
the method comprising the steps of:
- receiving via an interface a project query (Q) which is related to at least one component to re-configure the industrial system, whereby the industrial system is represented by a knowledge graph (KG), wherein components of a set of components are represented by graph nodes and relations between two components which are represented by edges between the corresponding nodes;
- automatically mining logical rules (L) consisting each of a rule body and a rule head from the knowledge graph which are assigned to confidence values, whereby the confidence value of each rule is estimated by determining the frequency of occurrence of the rule body in the knowledge graph and by validating if the rule head holds;
- predicting candidate components of said project query for each logical rule by calculating a score for each candidate component which is derived from the confidence values of every rule that implies said candidate;
- generating at least one recommendation (R) for introducing at least one additional component of the predicted candidate components into the industrial system on the basis of the calculated scores; and
- outputting the generated at least one recommendation to a user via a user interface (I) or executing the generated recommendations.

EP 4 086 825 A1

## Description

The present invention relates to a method and a system for providing recommendations concerning a project configuration to configure an industrial system.

BACKGROUND OF THE INVENTION

The process of configuring an industrial system in engineering projects involves several major steps. The appropriate components have to be selected by a user such that their interplay fulfills all functional requirements arising from the intended use case. To do this, a user or an engineer respectively who is in charge of configuring the industrial system typically utilizes configuration software containing a catalog of available components.

When a set of product components and their technical features are provided a user selects components that are compatible with each other and fulfill the functional requirements of the project configuration. Based on the project type and background knowledge about components, initial components can be proposed to a user in order to allow for a quick start. The user can then adjust the configuration and add more necessary components. Some components can be further configured by setting particular values that are specific to the project (e.g., temperature of devices, technical features).

Recommender systems in industrial configuration tools mostly propose recommended items without taking the multi-relational data structure into account that can be represented by knowledge graphs. Thus, prediction consists only of the item itself and does not contain the connection of the item to the whole configuration that can be provided by links in the graph.

There are different approaches for solving the link prediction task in a recommendation setting:

- Manual definition of rules by domain experts (e.g., if-then rules). Domain knowledge and time are needed for handcrafting useful rules, which need to be manually adapted when new items or configuration options are introduced.
- Collaborative filtering based on tensor factorization methods [1] that represent the information about entities and relations in a multi-dimensional tensor.
- Latent feature representation methods e.g. [4] that learn embeddings for each entity and relation and predict links by calculating scores for (entity, relation, entity)-triples.

While the manual definition of rules is time-inefficient and not scalable to large datasets, methods based on tensor factorization and latent features are black-box methods, which are not explainable nor user-understandable.

SUMMARY OF THE INVENTION

It is therefore the object of the present invention to provide an improved system and/or method for support in fixing and/or refining a query.

The above-mentioned object is achieved by a method and one or more apparatus or a system, preferably a distributed system, according to the features of the independent claims. Preferred embodiments of the invention are described in the dependent claims. Any combination of the features of the dependent claims to each other and with the features of the independent claims is possible.

An aspect of the invention is a method, preferably a computer-implemented method, for providing recommendations concerning a project configuration to configure or to design an industrial system. The method comprises the steps of:

- receiving via an interface a project query which is related to at least one component to re-configure the industrial system, whereby the industrial system is represented by a knowledge graph, wherein components of a set of components are represented by graph nodes and relations (connections) between two components which are represented by edges between the corresponding nodes;
- automatically mining logical rules consisting each of a rule body and a rule head from the knowledge graph which are assigned to confidence values, whereby the confidence value of each rule is estimated by determining or sampling the frequency of occurrence of the rule body in the knowledge graph and by validating if the rule head holds;
- predicting (possible) candidate components of said project query for each logical rule by calculating a score for each candidate component which is derived from the confidence values of every rule that implies said candidate;
- generating at least one recommendation for introducing at least one additional component of the predicted candidate components into the industrial system on the basis of the calculated scores; and
- outputting the generated at least one recommendation to a user via a user interface or executing the generated recommendations.

"If the rule head holds" means if the rule provides the value true.

Mining the logical rules can be performed by a learning agent.

The configuration of industrial system can be done by a (engineering) project. A link prediction problem in a knowledge graph, where the context of entities ( and connection to other entities), whereby entities in this context are components, is taken into consideration for the prediction.

The inventive method consists of automatically mining logical rules from the knowledge graph. When comparing data-driven approaches with rule-based solutions, this method is scalable. In addition, depending on complexity of the underlying industrial systems the invention could discover complex patterns to base the recommendations on.

Implementation of the invention into project engineering software tools can reduce time needed for completing the configuration of an engineering project. The user e.g. a project engineer can accept the complete or select one or more parts of the explained recommendations.

The score can be calculated by a product (socalled nosy-or) of the confidence values or by the maximum (called aggregation) of the confidence values.

Through sampling techniques for estimating the rule confidences and efficient implementation of maximum aggregation when applying the rules, the invention is scalable to large datasets.

The mining process usually starts from the source node of the knowledge graph, along edges of the knowledge graph, to target components represented by target nodes of the knowledge graph, to extract different paths between the source node and the target nodes, wherein each logical rule derived from an extracted path is assigned to said confidence value. The knowledge graph usually contains information about historical configuration solutions, components along with their technical features, user data, user order history, and background information considering the components and configurations (e.g. compatibility, availability).

The at least one recommendation can include a ranking in descending order of the predicted candidate components according to their calculated score.

The at least one recommendation can be presented on the user interface with at least one user-understandable explanation. The recommendations can come with explanations since the rules act as a human-understandable explanation on why a certain component is recommended, which leads to a more transparent configuration process.

Implementation of the invention into project engineering software tools can reduce time needed for completing the configuration of an engineering project. The user e.g. a project engineer can accept the complete or select one or more parts of the explained recommendations.

Said confidence value can depend on user requirements input by a user via the user interface and/or stored in the knowledge graph.

The generated at least one recommendation can be used to performing the (re-)configuration the industrial system by introducing one or more supplementary and/or additional into the industrial system.

Another aspect of the invention is a system for providing recommendations concerning a project configuration to configure an industrial system, whereby the system comprises at least one processor which is configured to perform the following steps:

- receiving via an interface a project query which is related to at least one component to re-configure the industrial system, whereby the industrial system is represented by a knowledge graph, wherein components of a set of components are represented by graph nodes and relations between two components which are represented by edges between the corresponding nodes;
- automatically mining logical rules consisting each of a rule body and a rule head from the knowledge graph which are assigned to confidence values, whereby the confidence value of each rule is estimated by determining the frequency of occurrence of the rule body in the knowledge graph and by validating if the rule head holds;
- predicting candidate components of said project query for each logical rule by calculating a score for each candidate component which is derived from the confidence values of every rule that implies said candidate;
- generating at least one recommendation for introducing at least one additional component of the predicted candidate components into the industrial system on the basis of the calculated scores, and
- outputting the generated at least one recommendation to a user via a user interface or executing the generated recommendations.

Embodiments as described above for the system can be analogously applied for the method and for computer program (product) and for the computer-readable storage medium.

This system which can be implemented by hardware, firmware and/or software or a combination of them.

The computer-readable storage medium stores instructions executable by one or more processors of a computer, wherein execution of the instructions causes the computer system to perform the method.

The computer program (product) is executed by one or more processors of a computer and performs the method.

BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following figures:

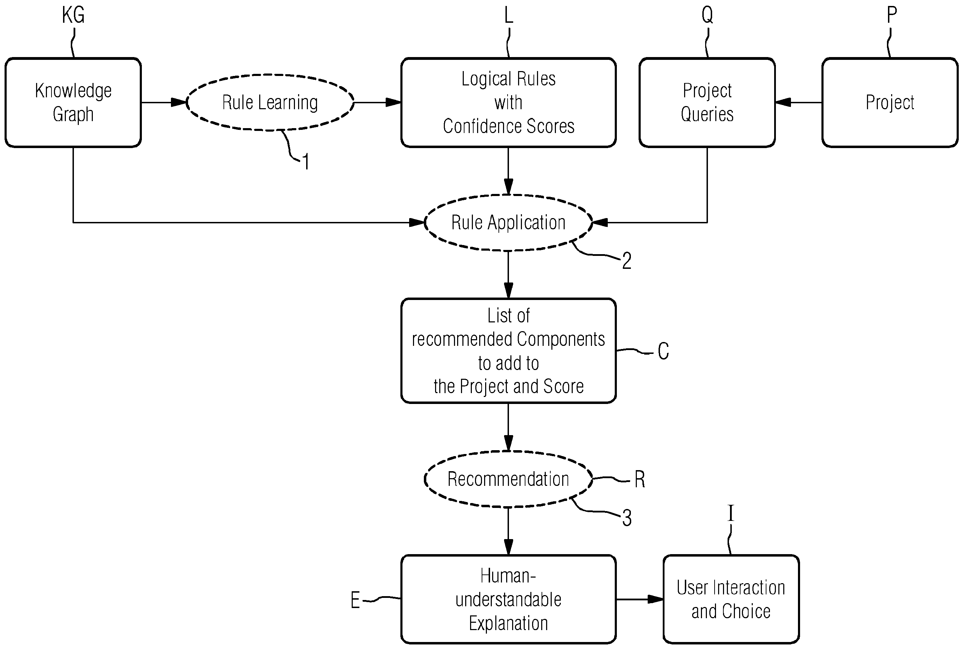

The figure shows a workflow of the inventive method.

The workflow shown in the figure includes steps marked with 1 to 3.

User data and/or project configuration data with can be used for an engineering project P in order to (re-)configure an industrial system comprising various components. These data are multi-relational data that can be represented as a knowledge graph KG whose entities representing components correspond to nodes and whose relations correspond to edges in the knowledge graph.

The inventive task to provide one or more recommendations R concerning project configuration can be formulated as a kind of link prediction problem in the knowledge graph. The context of entities is taken into consideration for the prediction. A framework can be used for providing scalable rule-based recommendations finally with the outcome of user-interpretable recommendations E which can be presented on a user interface I or used for automatically execution of the one or more recommendations. After receiving via an interface a project query Q which is related to at least one component to (re-)configure the industrial system, in step 1 the framework underlying method firstly learns rules based on historical information and background knowledge. Secondly, in step 2 the rules are applied to generate recommended components C, for which the rules also act as a human-understandable explanation. Thirdly, in step 3 explanation can be added to the one or more recommendations which can be finally presented on the user interface I.

In the following the steps 1 to 3 are explained in more detail:

> Step 1: Rule learning: That means: automatically mining logical rules consisting each of a rule body and a rule head from the knowledge graph which are assigned to confidence values, whereby the confidence value of each rule is estimated by determining the frequency of occurrence of the rule body in the knowledge graph and by validating if the rule head holds.

> Step 2: Rule application: That means: predicting candidate components of said project query for each logical rule by calculating a score for each candidate component which is derived from the confidence values of every rule that implies said candidate.

> Step 3: Recommendation, optionally with user-understandable explanation: That means: generating at least one recommendation for introducing at least one additional component of the predicted candidate components into the industrial system on the basis of the calculated scores,

And finally:
Outputting the generated at least one recommendation to a user via a user interface or executing the generated recommendations.

Rule Learning:

Input: knowledge graph containing all information about project configurations, components and a customer who operates the industrial system.
Output: logical rules with confidence values.

Information about historical configuration solutions, components along with their technical features, user data, user order history, and background information considering the components and configurations (e.g., compatibility, availability) is encoded into a knowledge graph that serves as the input for the rule learning. Given the knowledge graph, a rule mining method is applied that automatically mines rules from the graph.

A logical rule has the form $h(x_0,x_{n+1}) \leftarrow b_1(x_0,x_1) \wedge b_2(x_1,x_2) \wedge ... \wedge b_n(x_{n-1},x_n)$, where $h(x_0, x_{n+1})$ is the rule head and $b_1(x_0,x_1) \wedge b_2(x_1,x_2) \wedge ... \wedge b_{n(xn-1,x_n)}$ is the rule body. The variables $x_n$ and $x_{n+1}$ can take on the same entity but also different entities. The rule implies that if the rule body holds, then the rule head holds as well. Since there are rarely rules that are true under all conditions, we equip each rule with a confidence value. The standard confidence of a rule, i.e., how likely a rule is true, is defined by

$$\frac{rule\ support}{body\ support}.$$

Examples:

- Device (Customer, Number) <- OrderHistory(Customer, Device), Failsafe(Device, Type), InstallationHeight(Type, MaxHeight)
  Confidence: 78%

- Device (Project, Number) <- ProjectType(Project, Type), TemperatureMax(Type, MaxTemp), Connection (MaxTemp, ConnectionType), Plug(ConnectionType, PlugType)
  Confidence: 67%

A possible rule learning method is AnyBURL [2], which samples random walks in the graph and generalizes them to logical rules. The confidence of a rule is estimated by sampling a specific number/frequency of occurrences of the rule bodies in the graph and checking if the rule head holds.

Further possible rule learning method is explained in AMIE[3]. This method is explicitly tailored to support an open world assumption scenario. It is inspired by association rulemining and introduces a measure for the confidence. It uses a language bias to restrict the search space. Two atoms in a rule are connected if they share a variable or an entity. A rule is connected if every atom is connected transitively to every other atom of the rule. This method mines only connected rules, i.e., it avoids constructing rules that contain unrelated atoms. It is assumed that a rule is closed if every variable in the rule appears at least twice. Such rules do not predict merely the existence of a fact. It mines only closed rules. Recursive rules that contain the head relation in the body are allowed.

Rule application:

Input: logical rules with confidence values; knowledge graph containing all information about project configurations, components, and a customer who operates the industrial system; at least one query about the project of interest. The project query concerns one or more components which are to (re-) configure.

Output: at least one recommendation e.g. in the form of a list of at least one recommended (candidate) component to add to the project and therefore to introduce the at least one recommended candidate component into the industrial system, whereby the recommendation can also contain information about how candidate component(s) should be integrated/introduces into the industrial system; Score for each recommended component.

The learned/mined rules in step 1 are applied to the project of interest. If it is assumed that the rules are independent, noisy-or aggregation can be used to find predictions. In this case, all possible component are predicted as candidate components for each rule, where the score of a candidate component is the product of the confidence values of all rules that imply this candidate component. Another possible setting is maximum aggregation, where the score each candidate component with the maximum confidence value of all rules is calculated that imply this candidate component. More precisely, a prediction in the form $h(x_0, x_{n+1})$ for each rule it got, where $x_0$ already exists in the graph (current project), $x_{n+1}$ is the new recommended component, and $h$ is the relation that connects the entities $x_{n+1}$ and $x_0$. The relation $h$ determines how exactly the new component $x_{n+1}$ should be integrated into the existing configuration.

**Examples:**

* Device (P, Z) <- ProjectType(P, Production_54), TemperatureMax(Production_54, 40), Connection (40, C_44), Plug(C_44, P_12)
  Confidence: 67%

* Device (S, X) <- OrderHistory(S, Y), Failsafe(Y, "Prosafe"), InstallationHeight("Prosafe", 10m)
  Confidence: 78%

Explainable recommendation

Input: at least one recommendation e.g. in the form of a list of recommended components to add to the project; information about how they should be integrated into the configuration; score for each recommended component.

Output: sorted list of recommended components with scores; human-understandable explanation on why the component is recommended and how exactly the component should be integrated into the configuration.

The recommendations from step 2 are sorted by decreasing score and output on a user interface. To make the results user-understandable, the predicted links/edges in the graph and the logical rules that imply the predictions are reformulated. The link describes how the component is connected to the project, and the logical rules explain the recommendation. In a further step, verbalization is carried out, that make the generated recommendations more human-understandable.

Examples:

* Customer S should order device X because Customer S ordered device Y in the past and device Y comes with failsafe functionality "Prosafe" and devices with failsafe functionality "Prosafe" come with installation height max 10m, and if a device was ordered with failsafe functionality "Prosafe" and installation height max 10m, then device X is a good fit for the customer S with 78% confidence.

* For Project P, device Z should be ordered because Project P is of Project type Production_54 that comes with a temperature restriction of max 40 degrees and devices with temperature restrictions of max 40 degrees have connection type C_44, and devices which have a connection type C_44 have a plug type P_12 and if a project is of type Production_54, has a temperature restriction of 40 degrees, comes with a connection type C_44 and plug type P_12, then device Z is a good fit for the Project P with 67% confidence.

Training, deployment and user interaction of the system is described in the following:

Training

As a starting point, logical rules are automatically mined (step 1) from all available data about project configurations, components, and customers. The rules do not need to be learned/mined for every new project, but it is possible to reuse the rules for several projects. However, it is useful to update/relearn the rules and especially the confidence values of the rules after a certain amount of new project data is available. The same holds if new components are introduced to the system configuration. New information should be incorporated into the knowledge graph in a timely manner so that the rule learning step can make use of the new data.

Deployment

If a user creates a new project, the rules from step 1 are applied to generate prediction of candidate components (step 2) and explainable recommendations (step 3).

User interaction

The explainable recommendations from step 3 are presented in a graphical user interface to the user where the user should have the option to directly click on the desired component to add them to the current project configuration. If the user has certain requirements for the project (e.g., only use a certain type of device), he or she can check them in respective filtering boxes, and the inventive method can filter out the components that do not match the requirements.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the system and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

References

[1] Marcel Hildebrandt et al. Configuration of Industrial Automation Solutions Using Multi-Relational Recommender Systems. ECML-PKDD 2018

[2] Christian Meilicke et al. Anytime Bottom-Up Rule Learning for Knowledge Graph Completion. IJCAI 2019

[3] Luis Galárraga, Christina Teflioudi, Katja Hose, Fabian M. Suchanek, AMIE: "Association Rule Mining under Incomplete Evidence in Ontological Knowledge Bases", 20th International World Wide Web Conference (WWW 2013), http://resources.mpi-inf.mpg.de/yago-naga/amie/amie.pdf

[4] EP20197648

**Claims**

1. A method for providing recommendations concerning a project configuration to configure an industrial system,
the method comprising the steps of:

   - receiving via an interface a project query (Q) which is related to at least one component to reconfigure the industrial system, whereby the industrial system is represented by a knowledge graph (KG), wherein components of a set of components are represented by graph nodes and relations between two components which are represented by edges between the corresponding nodes;
   - automatically mining logical rules (L) consisting each of a rule body and a rule head from the knowledge graph which are assigned to confidence values, whereby the confidence value of each rule is estimated by determining the frequency of occurrence of the rule body in the knowledge graph and by validating if the rule head holds;
   - predicting candidate components of said project query for each logical rule by calculating a score for each candidate component which is derived from the confidence values of every rule that implies said candidate;
   - generating at least one recommendation (R) for introducing at least one additional component of the predicted candidate components into the industrial system on the basis of the calculated scores; and
   - outputting the generated at least one recommendation to a user via a user interface (I) or executing the generated recommendations.

2. Method according to claim 1 wherein the at least one recommendation includes a ranking in descending order of the predicted candidate components according to their calculated score.

3. Method according to claim 1 or 2 wherein the mining process starts from the source node of the knowledge graph, along edges of the knowledge graph, to target components represented by target nodes of the knowledge graph, to extract different paths between the source node and the target nodes, wherein each logical rule derived from an extracted path is assigned to said confidence value.

4. Method according to any of the preceding claims wherein the at least one recommendation is presented on the user interface with at least one user-understandable explanation (E).

5. Method according to any of the preceding claims wherein said confidence value can depend on user requirements input by a user via the user interface and/or stored in the knowledge graph.

6. System for providing recommendations concerning a project configuration to configure an industrial system, whereby the system comprises at least one processor which is configured to perform the following steps:

   - receiving via an interface a project query (Q) which is related to at least one component to reconfigure the industrial system, whereby the industrial system is represented by a knowledge graph (KG), wherein components of a set of components are represented by graph nodes and relations between two components which are represented by edges between the corresponding nodes;
   - automatically mining logical rules (L) consisting each of a rule body and a rule head from the knowledge graph which are assigned to confidence values, whereby the confidence value of each rule is estimated by determining the frequency of occurrence of the rule body in the knowledge graph and by validating if the rule head holds;
   - predicting candidate components of said project query for each logical rule by calculating a score for each candidate component which is derived from the confidence values of every rule that implies said candidate;
   - generating at least one recommendation (R) for introducing at least one additional component of the predicted candidate components into the industrial system on the basis of the calculated scores, and
   - outputting the generated at least one recommendation to a user via a user interface (I) or executing the generated recommendations.

7. System according to claim 6 wherein the at least one recommendation includes a ranking in descending order of the predicted candidate components according to their calculated score.

8. System according to claim 6 or 7 wherein the mining process starts from the source node of the knowledge graph, along edges of the knowledge graph, to target components represented by target nodes of the knowledge graph, to extract different paths between the source node and the target nodes, wherein each logical rule derived from an extracted path is assigned to said confidence value.

9. System according to any of the preceding system claims wherein the at least one recommendation is presented on the user interface with at least one user-understandable explanation (E).

10. System according to any of the preceding system claims wherein said confidence value can depend on user requirements input by a user via the user interface and/or stored in the knowledge graph.

11. Computer program which is being executed by one or more processors of a computer in order to perform a method according to any of the preceding claims 1 to 5.

12. Computer-readable storage media with a computer program according to previous claim 11.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/387804 A1 (MATHUR VIPUL [IN] ET AL) 10 December 2020 (2020-12-10) * abstract; figures 1,3 * ----- | 1-12 | INV. G06Q10/06 |

TECHNICAL FIELDS
SEARCHED (IPC)

G06Q

The present search report has been drawn up for all claims

| Place of search | Date of completion of the search | Examiner |
|---|---|---|
| Munich | 12 October 2021 | Stratford, Colin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 4 086 825 A1

**ANNEX TO THE EUROPEAN SEARCH REPORT
ON EUROPEAN PATENT APPLICATION NO.**

EP 21 17 2310

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2021

| Patent document cited in search report | Publication date | Patent family member(s) | Publication date |
|---|---|---|---|
| US 2020387804 A1 | 10-12-2020 | US 10679133 B1 | 09-06-2020 |
| | | US 2020387804 A1 | 10-12-2020 |

EPO FORM P0459

For more details about this annex : see Official Journal of the European Patent Office, No. 12/82

11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20197648 A

**Non-patent literature cited in the description**

- **MARCEL HILDEBRANDT et al.** Configuration of Industrial Automation Solutions Using Multi-Relational Recommender Systems. *ECML-PKDD,* 2018
- **CHRISTIAN MEILICKE et al.** Anytime Bottom-Up Rule Learning for Knowledge Graph Completion. *IJCAI,* 2019
- **LUIS GALÁRRAGA ; CHRISTINA TEFLIOUDI ; KATJA HOSE ; FABIAN M ; SUCHANEK, AMIE.** Association Rule Mining under Incomplete Evidence in Ontological Knowledge Bases. *20th International World Wide Web Conference (WWW 2013), http://resources.mpi-inf.mpg.de/yago-naga/amie/amie.pdf*